# EUROPEAN PATENT SPECIFICATION

(11) **EP 3 331 782 B1**
(45) Date of publication and mention of the grant of the patent: **09.12.2020**
(21) Application number: 16833475.3
(22) Date of filing: 05.07.2016
(51) Int. Cl.: B65G 27/32, B65G 25/04, B65G 27/00, B65G 27/08, B65G 27/10, B65G 27/20

(54) **IMPROVED LINEAR MOTION CONVEYOR**
VERBESSERTER FÖRDERER MIT LINEARBEWEGUNG
CONVOYEUR À MOUVEMENT LINÉAIRE AMÉLIORÉ

(30) Priority: 04.08.2015 US 201514818129
(43) Date of publication of application: 13.06.2018
(73) Proprietor: Key Technology, Inc., Walla Walla, WA 99362 (US)
(72) Inventor: GROENEWALD, Eugene, 3448 VD Woerden (NL)
(74) Representative: Schmid, Wolfgang
(86) International application number: PCT/US2016/040971
(87) International publication number: WO 2017/023469

(56) References cited:
- US-A- 2 669 344
- US-A1- 2011 083 944
- US-A1- 2011 240 442
- US-A1- 2013 048 470
- US-A1- 2014 041 987
- US-A1- 2014 332 351
- US-A1- 2014 332 351
- US-B1- 6 398 013

## Description

### TECHNICAL FIELD

The present invention relates to a linear motion conveyor, and more specifically to a linear motion conveyor having a drive assembly which may be readily and selectively adjusted so as to impart motion to a product being transported by the linear motion conveyor, in opposite first and second directions, or to further stop the motion of product along the linear motion conveyor.

### BACKGROUND OF THE INVENTION

Various conveying arrangements and devices have been devised and employed through the years for conveying products of various types along predetermined courses of travel between work stations. These various types of conveyors have included reciprocating conveyors, shuffle conveyors, vibratory conveyors, or shaking conveyors. Further, linear motion conveyors have been developed, and which are considered by some users to be operationally distinguishable from the other mentioned types of conveyors.

In this regard, linear motion conveyors or what are sometimes referred to "differential impulse" conveyors include a generally elongated, horizontal tray or pan having a planar surface for transporting goods thereon. During operation of these linear motion conveyors, the tray is moved slowly forward to convey the goods with respect to the tray, and then is pulled rearwardly at a higher return speed so that the goods slide along the tray. The prior art acknowledges that one of the significant advantage of these linear motion conveyors is that fragile goods which are being transported on same may move along in a manner that does not tend to damage them because the products do not roll or tumble or move out of contact with the underlying conveying surface.

Various types of linear motion conveyors have been taught in the art. The Office's attention is directed to US Patent No. 5,794,757 to Svejkovsky et al. and which shows several forms of a preferred differential impulse conveyor, and method, and which is useful for transporting products. This reference is interesting because of the recited history surrounding the development of conveyors of this style. While this invention suggests that differential impulse conveyors have been preferred in applications such as food handling, and the like, the reality is that this industry segment has not widely embraced these types of conveyors because they have not achieved all the objectives that they claim they were able to produce. Further, such prior art conveyors have tended to generate much more noise, and vibration than what their advocates will readily admit. Typically, these vibrations have been transmitted into underlying supporting surfaces, floors or mezzanines upon which these conveyors were mounted.

Additionally, and because of the physical relationships which exist between the various parts of these prior art conveyors, such prior art conveying arrangements are not readily adjustable so as to provide different conveying speeds, directions of movement, or which further can be readily adjusted so as to either slow down or stop the movement of product along the linear motion conveyor in the event that problems in a production line work station which is located downstream from the linear motion conveyor would require such stoppage of the product motion.

While the prior art arrangements as disclosed in the aforementioned prior art patent, and other devices used in the art, have worked with some degree of success, an acute need has emerged to provide a conveyor arrangement which will allow a product transporting conveyor of the type, which will be described hereinafter, to move product along a given course of travel, and which further can be readily adjusted so as to change the direction or speed of movement of the product, or even stop the movement of the product along the conveying surface depending upon the needs of the user, and without stopping the operation of the invention.

A linear motion conveyor which operates in the manner, as described above, is the subject matter of the present device.
US 2014/332351 A1 describes a linear motion conveyor according to the preamble of claim 1.

### SUMMARY OF THE INVENTION

The present invention relates to a linear motion conveyor according to claim 1. The present invention will be described in greater detail hereinafter.

### BRIEF DESCRIPTION OF THE DRAWINGS

Preferred embodiments of the invention are described below with reference to the following accompanying drawings.
Fig. 1 is an isometric, top view of the improved linear motion conveyor of the present invention.
Fig. 2 is an isometric, bottom view of the improved linear motion conveyor of the present invention.
Fig. 3 is an isometric, top view of the stationary base and which is a feature of the present invention.
Fig. 3A is an isometric, exploded view of the stationary base as seen in Figure 3.
Fig. 4 is an isometric, bottom view of the elongated conveyor bed and which is a feature of the present invention.
Fig. 5 is an isometric, bottom view of the elongated conveyor bed of Figure 4 and which is rotated about 180°.
Fig. 6 is an enlarged, partial, fragmentary isometric view of the connecting frame of the elongated conveyor bed.
Fig. 7 is an isometric, top view of the counterweight which forms a feature of the present invention.
Fig. 8 is an isometric, bottom view of the counterweight of Figure 7.
Fig. 9 is an isometric, top view of the drive assembly of the present invention.
Fig. 10 is an exploded, isometric top view of the drive assembly of Figure 9 and showing a powering unit separated from an eccentric drive unit.
Fig. 11 is an isometric, exploded view of the eccentric drive unit as seen in Figure 10.
Fig. 12 is an isometric, top side elevation view of the eccentric drive unit.
Fig. 13 is a top plan view of the drive assembly as seen in Figure 9.
Fig. 14 is an isometric, top view of the stationary base carrying the drive assembly and the counterweight, and showing the relationship of the components to one another.
Fig. 15 is a partially schematic side elevation view of the improved linear motion conveyor of Figure 1 and showing the movement of several components of the present invention in phantom lines.

### [THE REMAINDER OF THIS PAGE WAS LEFT INTENTIONALLY BLANK]

### DETAILED DESCRIPTION OF THE PREFERRED EMBODIMENTS

The improved linear motion conveyor of the present invention **10** generally comprises a stationary base **200,** a drive assembly **79,** a frame assembly **20,** a counterweight **40,** and an elongated conveyor bed **60.**

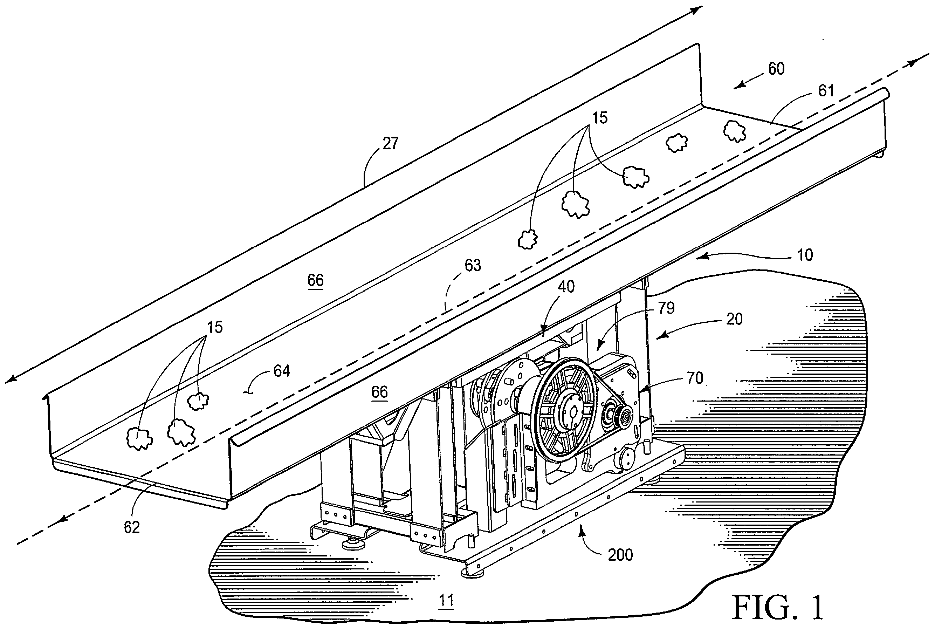

The improved linear motion conveyor of the present invention is generally indicated by the numeral **10** in Figs. 1 and following. The invention **10** is supported on the stationary base **200** which, in turn, rests upon an underlying supporting surface which is generally indicated by the numeral **11.** The underlying supporting surface may comprise a supporting floor of a factory, or other supporting surface located therebeneath.

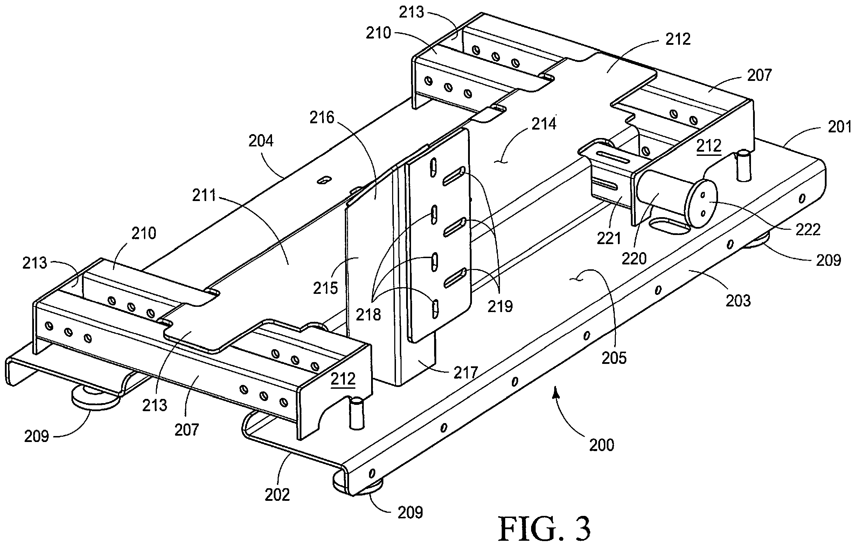

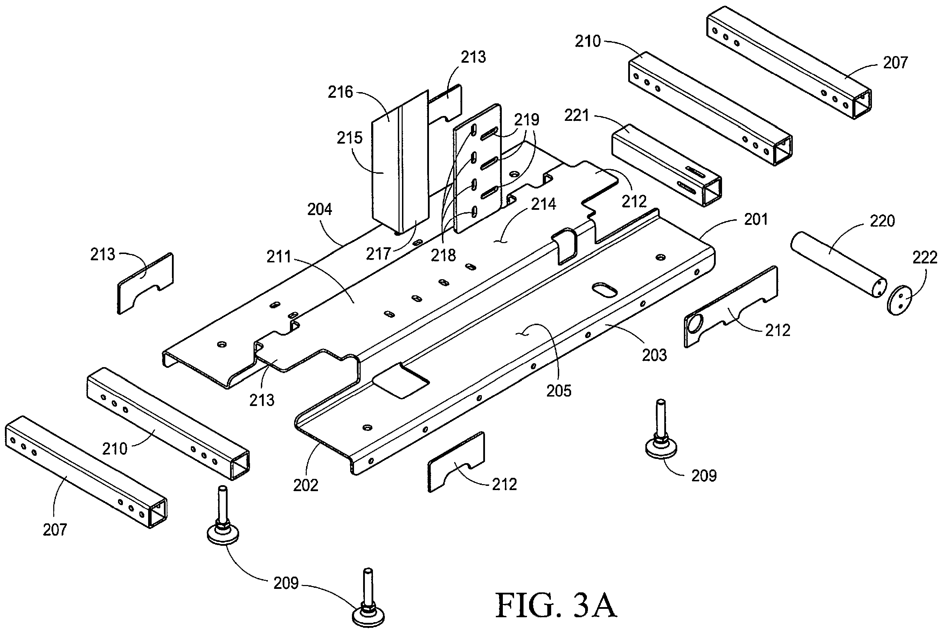

The stationary base **200** (Figures 3, 3A) is generally rectilinear in configuration and has a first end portion **201;** a second end portion **202;** a first side portion **203;** a second side portion **204;** a top surface **205;** and a bottom surface **206.** The frame spring mounts **207** (Fig. 3) are formed of box beam members and are fixedly attached to the top surface **205** and are proximate to the first end, or portion **201,** and proximate the second end, or portion **202** and extend transversely between the first side portion **203,** and second side portion **204,** respectively. A plurality of spaced and generally longitudinally aligned fastener holes are formed in each opposing end portion of the translation frame spring mounts **207,** and which receive conventional fasteners **16.** The fasteners secure the frame assembly **20** to the stationary base **200.**

Counterweight spring mounts **210** (Fig. 3) are similarly formed of box beam members and which are fixedly attached to the top surface **205,** and located proximate to the first end portion **201** and the second end portion **202,** and inwardly of the translation frame spring mounts **207.** These structures extend transversely between the first side portion **203** and the second side portion **204.** A plurality of generally longitudinally aligned fastener holes are formed in each opposing end portion of the counterweight spring mounts **210,** and receive conventional fasteners **16** which secure the counterweight **40** to the stationary base **200.** A supporting surface or platform **211,** and which includes end caps **212, 213** are structurally attached to and communicate between proximate end portions of the translation frame spring mounts **207** and the counterweight spring mounts **210,** respectively. The end caps **212, 213** provide additional structural rigidity and maintain the spaced distance between the spring mounts **207, 210.** A raised elongate platform **211** extends between the two spaced apart counterweight spring mounts **210** and is medially positioned between the first side **203** and the second side **204.** The raised and elongated platform, or supporting surface **211** provides a planar surface **214** which carries and supports various subassemblies of the drive assembly **79** and which will be discussed, below.

A vertical motor mount **215** (Fig. 3) is structurally attached to the stationary base **200,** and is spaced from the counterweight spring mount **210,** and fixedly located proximate the second end **202.** The vertical motor about **215** has a lower end **217** which is structurally attached to the top surface **205** of the stationary base **200;** and an upper end **216** which is located distally from the top surface **205.** A plurality of spaced and vertically elongated holes **218** and a plurality of spaced and horizontally elongated holes **219** are formed in the vertical motor mount **215.** The elongated holes **218** and **219** provide a means for horizontal and vertical adjustment of a portion of the drive assembly **79** relative to the stationary base **200.** As will be discussed, hereinafter the selective positioning of a portion of the drive assembly **79,** relative to the stationary base **200** is effective in determining the frequency of oscillation of the elongated conveyor bed **60,** and counterweight **40,** and the resulting direction of movement of product **15** carried on a product transporting surface 64 of the elongated conveyor bed **60.** (Fig. 1).

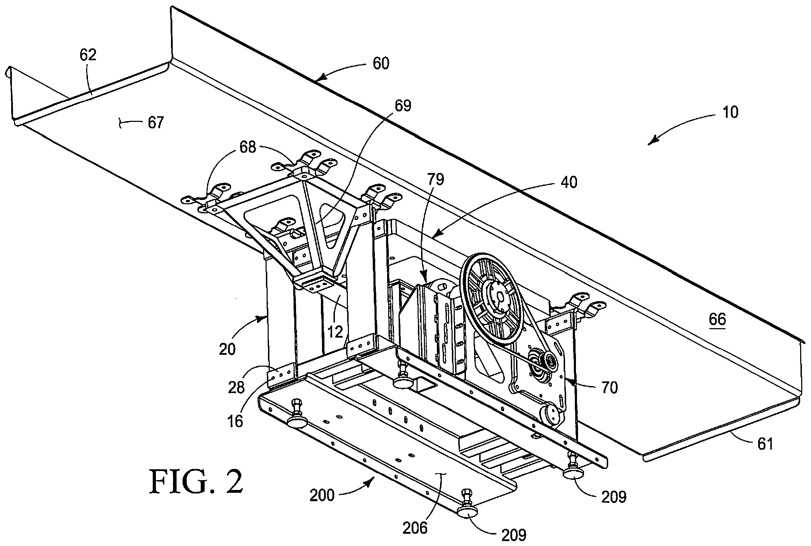

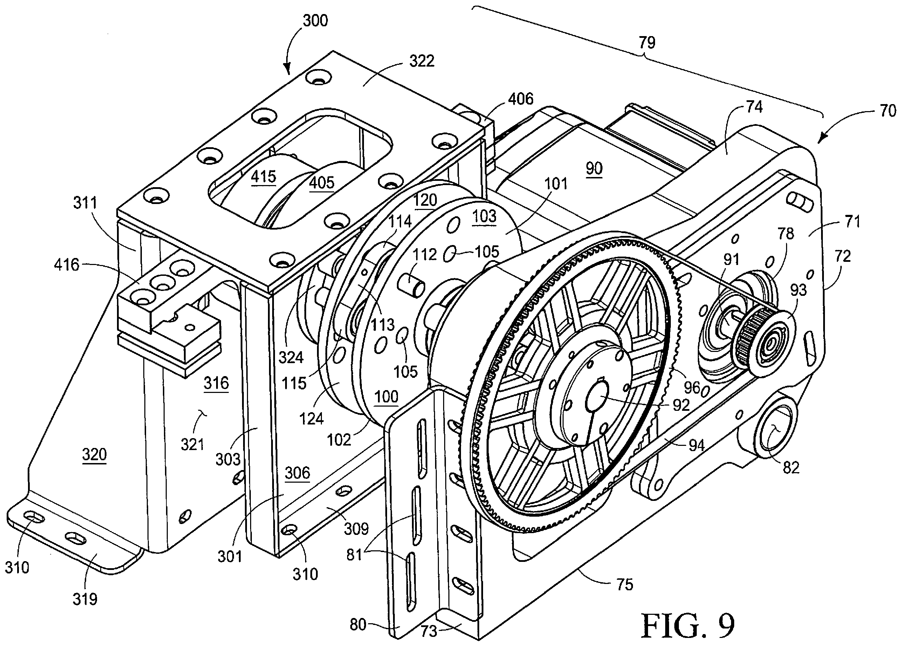

A pivot axle **220** (Fig. 3) having a box beam sleeve **221,** and a disk shaped end cap **222** is carried by the stationary base **200,** and located inwardly relative to the counterweight spring mount **210,** and proximate the first end **201,** and the first side **203** respectively. The pivot axle **220** is generally cylindrical in shape, horizontally oriented, and extends transversely to the stationary base **200** and is partially, axially carried in a channel (not shown) and which is defined by the box beam sleeve **221.** The pivot axle **220** provides a pivot point for rotational movement of a powering unit **70** (Fig. 9), and which is a subassembly of the drive assembly **79.** As noted previously, the stationary base **200** is supported on an underlying supporting surface **11.** A plurality of spaced leveling feet **209** which communicate with the bottom **206** (Fig. 2) of the stationary base **200** provide a means for precisely leveling the invention **10** in its operating environment. The precise leveling of the invention **10** is important because inclines, declines, slants and the like of the invention **10** will affect product **15** movement on the product transporting surface **64.**

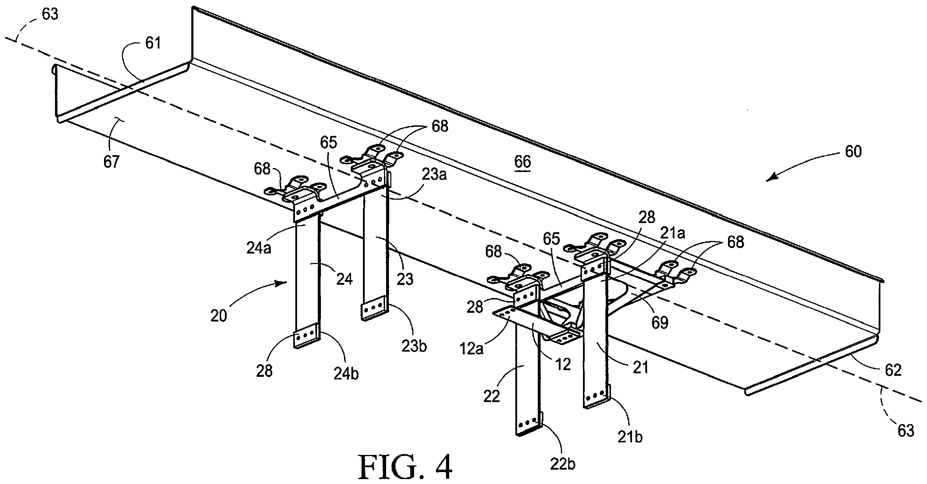

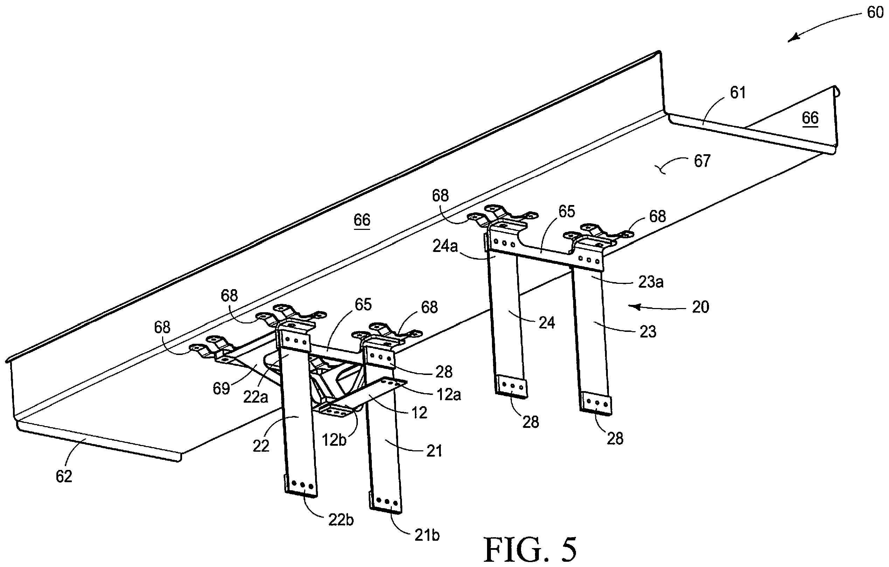

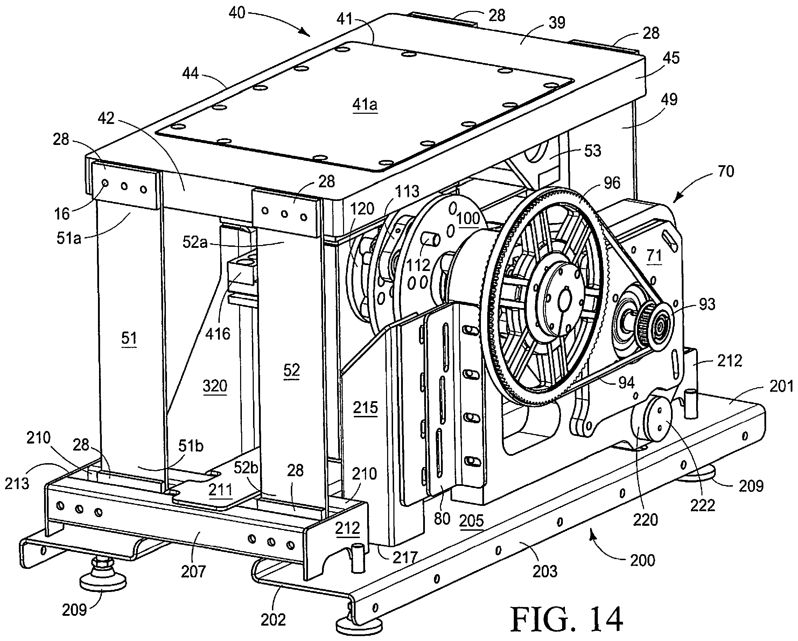

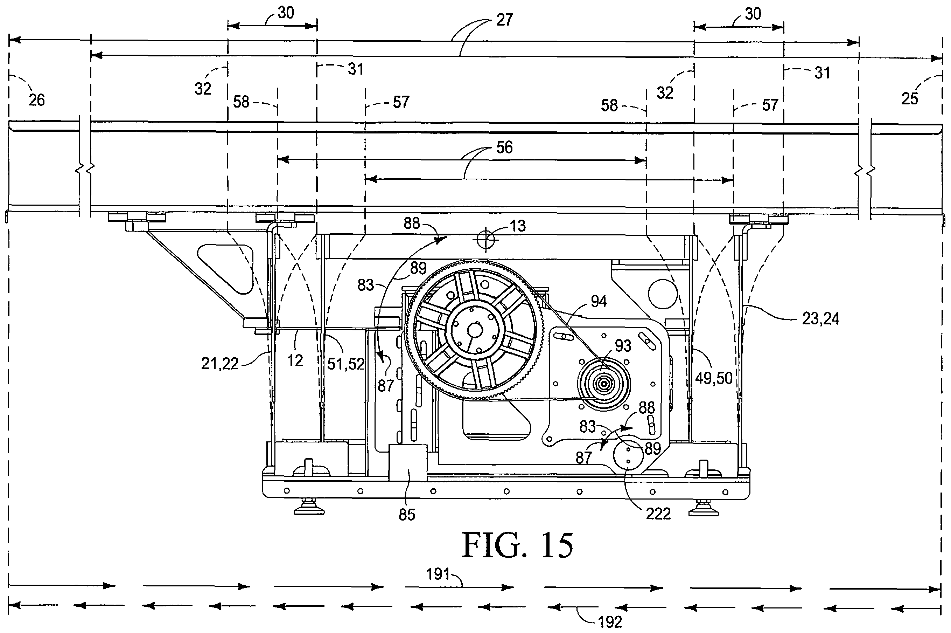

The frame assembly **20** is generally indicated by the numeral **20** (Figs.4, 5) and communicates between the stationary base **200,** and the elongated conveyor bed **60.** The frame **20** facilitates substantially parallel movement of the elongated conveyor bed **60** although it is recognized movement of the elongated conveyor bed **60** upon the translation frame **20** includes some minor component of vertical movement which is anticipated to be less than approximately 2% of the amount of horizontal movement. The translation frame **20** includes a first spring leg **21;** a second spring leg **22;** a third spring leg **23;** and a fourth spring leg **25.** Each of the respective spring legs **21, 22, 23, 24** has a lower/bottom or first end which is located proximate the stationary base **200,** and which is designated by the letter **"b" (21b, 22b, 23b, 24b);** and an upper/top or second end which is located proximate to the elongated conveyor bed **60,** and which is designated by the letter **"a" (21a, 22a, 23a, 24a).** Each of the respective spring legs **21, 22, 23, 24** is formed of a spring steel, or more commonly a synthetic composite such as, but not limited to, laminated fiberglass, carbon fiber, or the like. The respective spring legs **21, 22, 23, 24** are strong, resilient, durable and resistant to torsion/twisting forces so as to impede any "yawing" motion of the elongated conveyor bed **60** during operation. Each of the respective spring legs **21, 22, 23, 24** are spaced apart from the other legs, and are substantially parallel to the others. The respective spring legs **21, 22, 23, 24** provide an interconnection between the stationary base **200,** and the elongated conveyor bed **60.** The length of the respective spring legs **21, 22, 23, 24** from the upper/top end **21a, 22a, 23a, 24a,** to the lower/bottom end **21b, 22b, 23b, 24b** positionally maintains the elongated conveyor bed **60** in a predetermined spaced relationship above the stationary base **200.** Each of the respective spring legs **21, 22, 23, 24** defines plural fastener holes (not shown) in each opposing end portion **(a, b)** for cooperation with a conventional fastener **16.** The fasteners pass through the respective spring legs so as to secure the respective spring legs **21, 22, 23, 24** to the spring mounts **207** which are mounted on the stationary base **200** respectively and to the elongated conveyor bed **60.** Reinforcing plates **28** (Fig. 2) define fastener holes (not shown) that align with the fastener holes (not shown) and which are formed in the opposing end portions **(a, b)** of the spring legs **21, 22, 23, 24.** These fastener holes are used to reinforce the attachment of the lower/bottom ends **21b, 22b, 23b, 24b** of the spring legs to the spring mounts **207** of the stationary base **200.** This arrangement also reinforces the spring leg upper/top ends **21a, 22a, 23a, 24a** to the transverse spring leg mounts **65,** and which are carried on a bottom surface **67** of the elongated conveyor bed **60.** (Fig. 5). The reinforcing plates **28,** along with conventional fasteners **16,** fixedly "sandwich" the respective spring leg **21, 22, 23, 24** ends **(a, b)** to the spring leg mounts **65** (Fig. 5), and the frame spring mounts **207.** (Fig. 14). The interconnection of the respective spring leg **21, 22, 23, 24** ends **(a, b)** to the elongated conveyor bed **60,** and to the stationary base **200** eliminate any "pivotal" interconnection therebetween. The fixed interconnection of the respective spring legs **21, 22, 23, 24** to the elongated conveyor bed **60,** and the stationary frame **200** eliminates the need for bearings at the interconnections, and also reduces wear, and tear and the maintenance which is necessary to support the movable elongated conveyor bed **60.** Further, the fixed interconnection of the respective spring legs **21, 22, 23, 24** relative to the elongated conveyor bed **60,** and the stationary base **200** provides for a substantially continuous tension to be generated as the elongated conveyor bed **60** is moved from a first position **25,** (Figure 15) to a second position **26** (Figure 15) along a longitudinal axis **63** of the elongated conveyor bed **60.** This reciprocal movement imparts predetermined movement to the product **15** and which is carried on a product supporting surface **64.** Further still, the use of the respective spring legs **21, 22, 23, 24** and the fixed interconnections has a tendency to reduce the noise of operation, and further reduce the overall mass of the invention **10.** The reduction of noise is attributable, at least in part, to the removal of movable/pivotal interconnections (e.g. bearings) which necessarily have some amount of "play" to facilitate movement and which may be exacerbated after periods of use.

The frame **20,** (Fig. 4) and more specifically the top ends **21a, 22a, 23a, 24a** of the spring legs **21, 22, 23, 24** are moveable along a predetermined reciprocal course of travel that is generally indicated by the numeral **30.** (Fig. 15) The course of travel **30** is defined between a first, or forwardly directed position **31,** (Fig. 15) and a second, opposite, and rearwardly located position **32.** (Fig. 15). As will be discussed in greater detail in this application, the frame **20** is reciprocally moveable along this course of travel **30** at different velocities in order to achieve the benefits of the present invention.

The present invention **10** also includes a reciprocally moveable, and elongated conveyor bed which is generally indicated by the numeral **60.** The elongated conveyor bed **60** has a first end **61,** and an opposite second end **62.** (Fig. 1). Still further, the elongated conveyor bed **60** is generally defined by a longitudinal axis which is indicated by the line labeled **63.** The elongated conveyor bed **60** has a product transporting surface **64,** which is operable to be reciprocally moved in opposite directions, and at varying velocities so as to cause a product **15,** which is deposited on the product transporting surface **64,** to move between the opposite first and second ends **61** and **62** in a predetermined manner. The elongated conveyor bed also has a pair of spaced, substantially vertically disposed sidewalls **66** which confine the product **15** on the product transporting surface **64.** The elongated conveyor bed **60** also has a bottom surface **67.** (Fig. 4).

Mounting brackets **68** (Fig. 4) are carried on the bottom surface **67,** and are spacedly arrayed between the first and second ends **61** and **62,** and located laterally inwardly relative to the spaced sidewalls **66.** As will be recognized by a study of Figs. 4 and 5, transverse spring leg mounts **65** interconnect with the mounting brackets **68,** and also with the upper/top end portions **21a, 22a, 23a, 24a** of the spring legs **21, 22, 23, 24.** The upper/top ends **21a, 22a, 23a, 24a** are fixedly attached with conventional fasteners **16,** and reinforcing plates **28** to the transverse spring leg mounts **65.** This arrangement renders the spring leg mounts irrotatable relative to the elongated conveyor bed **60.** As noted previously, the lower/bottom ends **21b, 22b, 23b, 24b** of the respective spring legs **21, 22, 23, 24** are fixedly attached to the spring leg mounts **207** of the stationary base **200** and are likewise thereby rendered substantially irrotatable relative to the stationary base **200.**

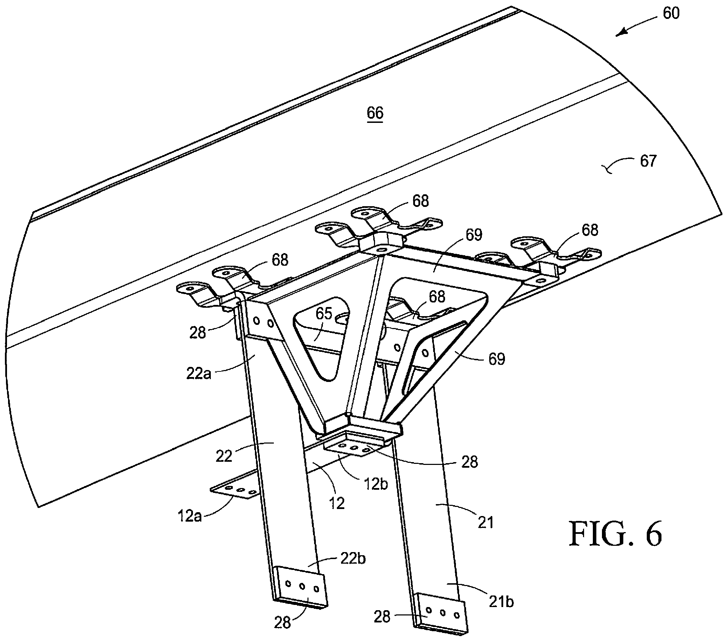

A drive frame **69** (Fig. 6) and which is formed of a plurality of interconnected beams, and struts, is carried on the bottom surface **67** of the elongated conveyor bed **60.** The drive frame **69** is located in spaced relation relative to the second end portion **62,** is and generally centrally positioned between the spaced apart sidewalls **66.** The drive frame **69** carries a generally horizontal inwardly extending driver member **12** that interconnects with the eccentric drive unit **300,** and which will be discussed in greater detail, hereinafter. The drive member **12** has a first end portion **12a** that is proximate a medial portion of the elongated conveyor bed **60,** and a second end portion **12b** that is proximate to the second end **62.** The drive member is formed of a flexible or resilient material which will allow it to flex about its longitudinal axis.

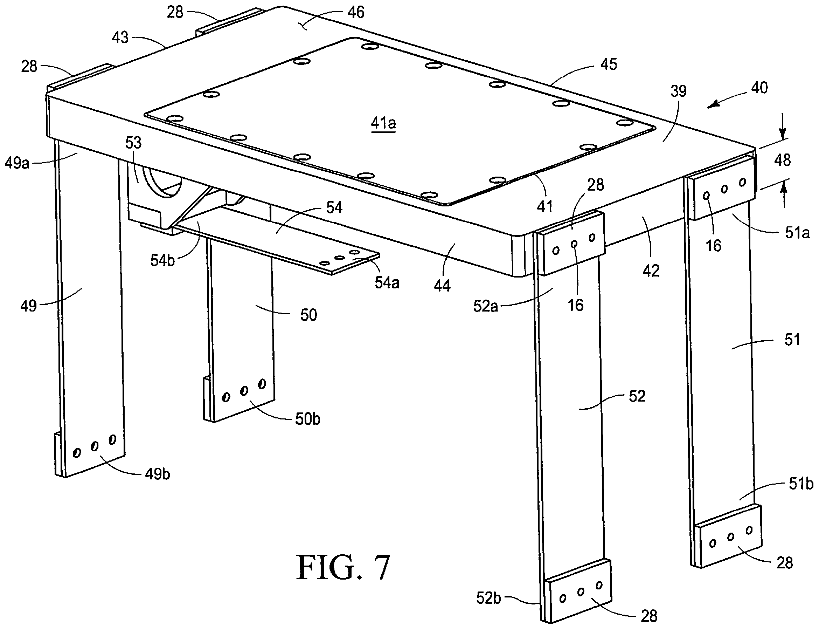

The present invention **10** includes a counter weight which is generally indicated by the numeral **40,** (Figs. 7, 8, 14) and which is carried in a location which is vertically, below, the elongated conveyor bed **60,** and vertically above the drive assembly **79.** The counter weight **40** generally comprises a slab weight frame **39;** a slab weight **41;** and individual spring legs **49, 50, 51, 52** respectively. The slab weight frame **39** is generally rectilinear in configuration and has a first end portion **42;** a second end portion **43;** a first side portion **44;** a second side portion **45;** a top **46;** a bottom **47;** and having a dimensional thickness **48.** A medial cavity **41** is defined in the top **46** and releasably carries the slab weight **41a** therein. The respective spring legs **49, 50, 51,** and **52** are substantially similar in length, and width dimensions to each other, and further have an upper/top end portion designated by the letter **"a",** and a lower/bottom end portion designated by the letter **"b".** The respective spring legs **49, 50, 51** and **52** are located in predetermined, substantially parallel, spaced relation, relative to each other. The spring legs **49, 50, 51** and **52** are further located at the first end **42,** and second end **43,** and in the corners of the slab weight frame **39.** The upper/top end portions **49a, 50a, 51a, 52a** are fixedly attached to the slab weight frame **39** by conventional fasteners **16,** and reinforcing plates **28** as earlier described. Additionally, the lower/bottom end portions **49b, 50b, 51b, 52b** are fixedly attached to the counterweight spring mounts **210** of the stationary base **200** with reinforcing plates **28** and conventional fasteners **16.** The fixed attachment of the respective spring legs **49, 50, 51, 52** to the slab weight frame **39,** and to the counterweight spring mounts **210** positionally maintains the respective spring legs **49, 50, 51** and **52** in substantially parallel, spaced relation. The respective spring legs **49, 50, 51, 52** are preferably formed of a spring steel, or more commonly, of a known composite such as, but not limited to, laminated fiberglass, carbon fiber, or the like and which is strong, resilient, durable, and substantially resistant to torsion/twisting forces. This materially impedes "yawing" movement of the counterweight **40** during operation.

The slab weight **41** which provides various operational features of the present invention **10,** is here illustrated as being a substantially rectilinear shaped main body having a predetermined weight. However, it will be recognized that other shapes would work with equal success, and the weight of the slab weight **41** may be adjusted by varying the thickness **48** or composition of the slab weight **41** without changing the length and width dimensions thereof, so that the slab weight **41** may be positionally maintained within the cavity (not shown) defined in the top **46** of the slab weight frame **39.**

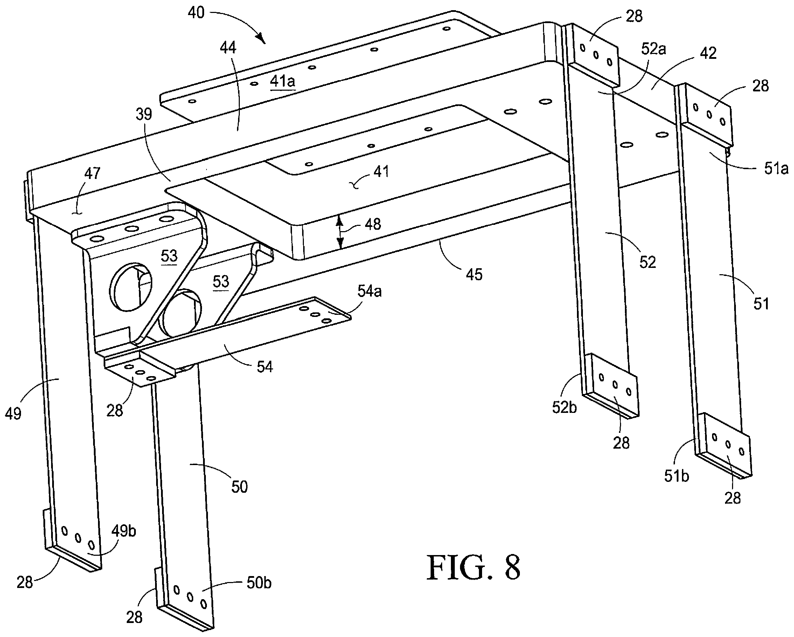

Referring now to Figs. 7 and 8, a drive frame **53** which is formed of plural interconnected beams and struts is carried on the bottom **47** of the slab weight frame **39.** The drive frame **53** is located proximate the second end **43,** and generally centrally between the first side **44** and the second side **45.** The drive frame **53** carries a flexible drive member **54** that interconnects with, or is coupled with, the eccentric drive unit **300,** and will be discussed in greater detail, hereinafter. The drive member **54** has a first end portion **54a** which is located proximate to the first end portion **42,** and a second end portion **54b** proximate to the second end **43.**

The counter weight **40** is moveable along a reciprocal path of travel that is generally indicated by the numeral **56.** (Fig. 15). The reciprocal path of travel **56** is defined between a first, forward oriented position **57,** and a second, rearward oriented position **58.** The repeated reciprocal motion of the counter weight **40** as will be described, hereinafter, provides an assortment of operational characteristics for the elongated conveyor bed **60.**

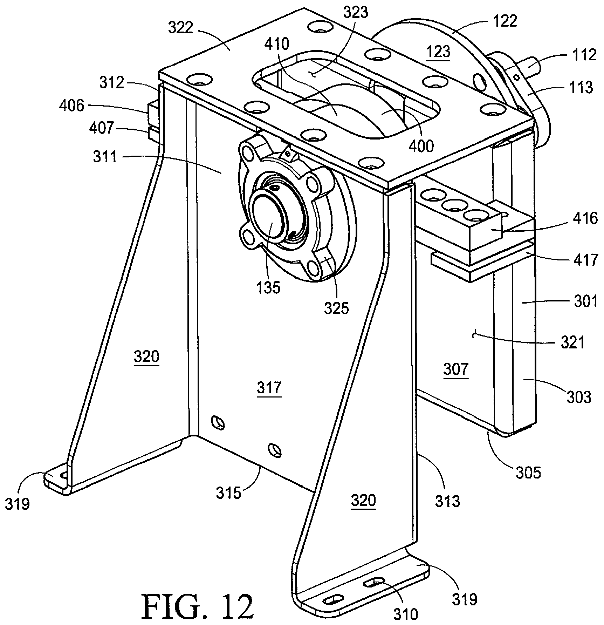

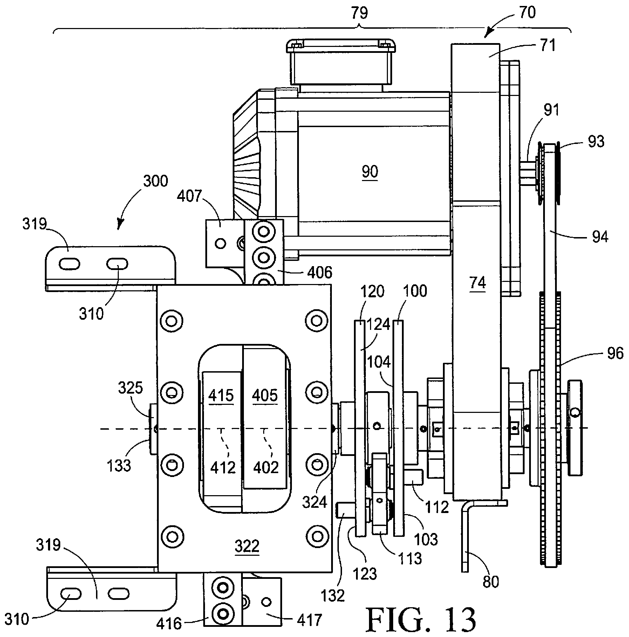

The drive assembly **79** (Figures 9-13) includes various interconnected subassemblies, all of which will be described in detail. Generally speaking, the drive assembly **79** is supported by the stationary base **200,** and is further oriented and operationally coupled in force transmitting relation relative to the elongated conveyor bed **60,** and to the counterweight **40,** so as to impart predetermined reciprocal motion to the same to achieve the benefits of the present invention **10.** The major subassemblies of the drive assembly **79** are a powering unit **70;** the vertical motor mount **215;** the pivot axle **220** which is supported by the stationary base **200;** and an eccentric drive unit **300.**

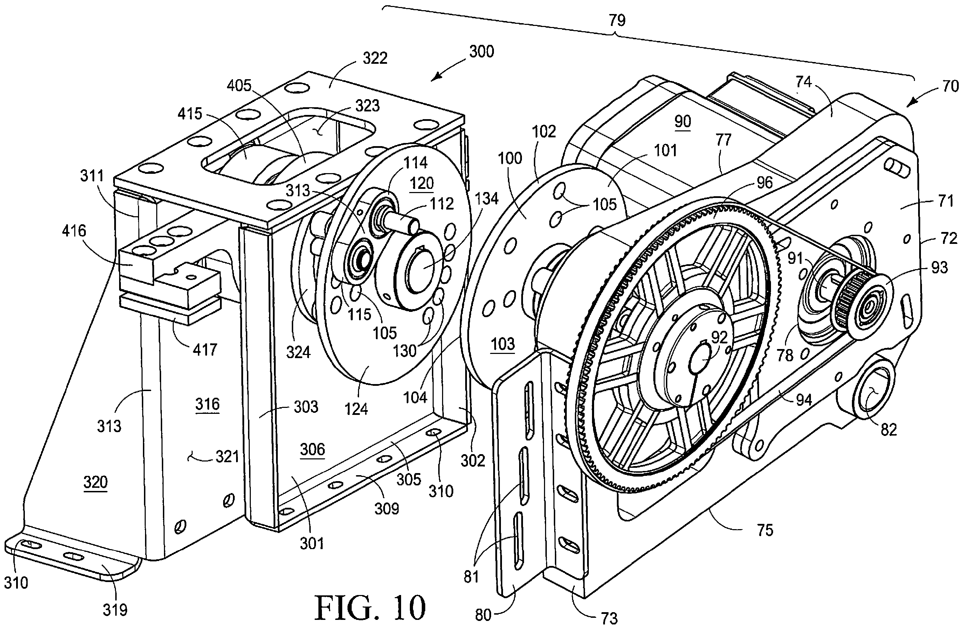

The powering unit **70** generally provides a selectively energizable motor **90,** which is mounted on a housing **71.** The powering unit further includes an endless drive belt **94** and a drive wheel **96.** As shown in Figure 10, the housing **71** is somewhat generally rectilinear in configuration and further has a first end **72;** a second end **73;** a top **74;** a bottom **75;** a first side **76;** and a second side **77.** The housing **71** fixedly carries the selectively energizable motor **90** on the second side **77.** The selectively energizable motor **90** further has an output shaft **91** which extends transversely through a shaft orifice **78,** and which is defined in the housing **71** so that the output shaft **91** extends transversely through the housing **71** and perpendicularly outwardly from the first side **76** thereof.

A drive pulley, or shim **93** is carried on the output shaft **92** and frictionally engages the endless drive belt **94** which communicates force to the drive wheel **96** so as to transfer rotational motion of the output shaft **91** thereto. The drive wheel **96** is carried on, or positioned on the first side **76** of the housing **71,** and on a first axle **92.** The first axle **71** is journaled in bearings (not shown), and a bearing block (not shown), and is carried by the housing **71** and is further spaced apart from the drive pulley **93.** The drive wheel **96** has a diameter larger than a diameter of the drive pulley **93** so as to function as a reduction gear. As is known to those who are skilled in the art, varying the diameter of the drive pulley **93** and/or the diameter of the drive wheel **96** will vary the rotational ratio of the drive pulley **93** relative to the drive wheel **96** so to increase and/or decrease the rotational speed thereof. A pivot axle aperture or hole **82** is defined by the housing **71,** and is located adjacent to the first end **72,** and the bottom **75.** The aperture **82** extends transversely through the housing **71.** The pivot axle aperture **82** axially receives the pivot axle **220** and which is carried by the stationary base **200** so that the drive unit **70** and its attached components may pivot and move along a radial arc **83** relative to the pivot axle **220.** (Fig. 15).

A mounting flange **80** is carried at the second end of the housing **71.** The mounting flange **80** defines a plurality of vertically elongated holes **81** for receiving fasteners (not shown). The fasteners secure the mounting flange **80** to the vertical motor mount **215.** The vertically elongated holes **81** permit the drive unit **70,** and its attached components to be adjustably positioned relative to the vertical motor mount **215,** as the drive unit **70** is pivoted about the pivot axle **220.** The pivoting of the drive unit **70** about the pivot axle **220** causes the powering unit **70** to move along the radial arc identified as **83.** (Fig. 15).

Those skilled in the art will recognize that the movement of the powering unit **70** about the radial arc **83** will add both a vertical component of movement, as well as a horizontal component of movement to the powering unit **70.** This rotational movement has some tendency to reduce any vertical component of movement of the invention **10** during operation as the respective spring legs **21, 22, 23, 24** move in unison.

One skilled in the art will recognize that the powering unit **70** may be rendered selectively moveable along the radial arc **83** by employing any number of other assemblies including all manner of pneumatic or hydraulic pistons, gear drives, jackscrews and the like, and which can be selectively electrically or mechanically controlled so as to achieve the numerous benefits of the present invention. Such a moving means is generally identified as element **85.** (Fig 15).

The operable coupling of the output shaft **91** to the first axle **92** may be done by conventional means, that is, by belt, sprocket and chain, or direct coupling to the first axle **92** to effect the rotation of the first axle **92** in a given rotational direction. Again, the selectively energizable motor **90** may be coupled to suitable electronic controls (not shown) to effect the selective energizing of the motor **90** to initiate and stop the operation of the present invention **10,** or further to selectively move the powering unit **70** to given operational locations along the radial arc **83** and which achieves the benefits of the invention which are disclosed.

Referring now to Fig. 10, and mounted on the end of the first axle **92,** and located opposite the drive plate **96,** is a first drive plate **100** which functions as a first eccentric weight. The first drive wheel **100** has a substantially circular main body **101** which is defined by a peripheral edge **102.** The circular main body **101** has a first outwardly facing surface **103;** and an opposite, second inwardly facing surface **104.** An axle aperture (not shown) is formed substantially centrally thereof, and is operable to mateingly couple to one end of the first axle **92,** and which is located opposite to the drive wheel **96.**

The first drive plate **100** (Figs. 9, 10) has a multiplicity of through holes or apertures **105** which are formed in a given pattern therein. The area of the first drive plate **100** which is located opposite the plurality of through holes or apertures **105** defines, in part, an eccentrically weighted region, or portion of the first drive plate **100.** In a position located opposite to the eccentrically weighted portion, the first eccentric weight **100** includes a coupling post **112** and which is located near the peripheral edge **102,** and which further extends normally outwardly therefrom. The coupling post **112** may be positionally adjusted by matingly cooperating with one of the plurality of holes or apertures **105.** This arrangement provides further adjustability to the instant invention **10.** The coupling post **112** is operable to rotatably engage and cooperate with a drive link **113.** The drive link **113** has a first end **114** which rotatably engages or couples to the coupling post **112,** and an opposite second end **115** which rotatably couples with a second drive plate **120** and which is carried by the eccentric drive unit **300,** and which is discussed in the paragraphs which follow.

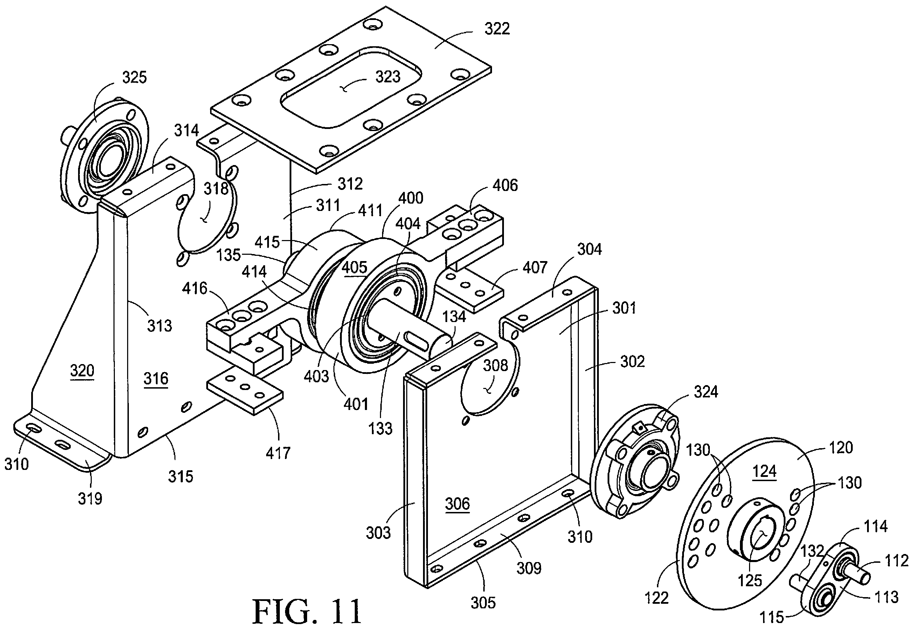

As shown in Figs. 11, 12 and 13 the eccentric drive unit **300** comprises a generally hollow frame. The eccentric drive unit **300** has a first frame member **301;** a second frame member **311;** and a top member **322.** The first frame member **301** has a first end **302;** a second end **303;** a top **304;** a bottom **305;** a first side **306;** a second side **307.** The first frame member **301** defines an axle hole **308** which communicates between the first side **306** and the second side **307.** A perpendicularly extending flange **309** is carried along the peripheral edge and further defines a plurality of holes **310** for carrying or receiving fasteners (not shown). These fasteners mount the first frame member **301** to the stationary base **200.** The second frame member **311** similarly has a first end **312;** a second end **313;** a top **314;** a bottom **315;** a first side **316;** a second side **317.** The second side member **311** defines an axle hole **318** which communicates between the first side **316,** and the second side **317.** A perpendicularly extending flange **319** is carried along the peripheral edge and defines a plurality of holes **310** for carrying or receiving fasteners (not shown) so as to mount the second frame member **311** to the stationary base **200.** As best seen in Figure 10, the second frame member **311** has a pair of generally triangular shaped support legs **320** which individually extend perpendicularly outwardly from the second side **317,** and from a location near the first end **312,** and the second end **313** so as to provide lateral support when securing the eccentric drive unit **300** to the stationary base **200.** The top frame member **322** defines a medially oriented orifice **323** and which communicates between the top portions **304,** and **314** of the first and second frame members **301,** and **311** respectively. The top frame member **322** positionally maintains the spaced relationship between the first and second frame members **301,** and **311** relative to one another so that a channel **321** is maintained or defined therebetween. A bearing (not shown) and which is carried within a bearing block **324** (Fig. 11) is carried on the first side **306,** of the first frame member **301.** A similar bearing block **325** carrying a bearing (not shown) is carried on the second side **317** of the second frame member **311.** The bearings (not shown) within the respective bearing blocks **324,** and **325** journal, or rotatably support, a second axle **133** that extends transversely through the first and second members **301,** and **311,** and across the channel **321** which is defined by the frame members **301, 311.** The second axle **133** carries the second drive plate **120** which functions as a second eccentric weight.

As best seen in Figs. 10 and 11, the second drive plate **120** is similar to the first drive plate **100,** and further includes a circular main body **121** which is defined by a peripheral edge **122.** The circular main body **121** has a second inwardly facing surface **124** which is disposed in predetermined, spaced, substantially parallel relationship relative to the second inwardly facing surface **104** of the first drive plate **100.** Still further, the main body **121** is defined by a first, outwardly facing surface **123.** Similar to the first drive plate **100,** the second drive plate **120** includes an axle aperture **125** which is formed substantially centrally thereof. Similar to that as earlier described, and discussed with respect to the first drive plate **100,** a multiplicity of through holes **130** or apertures are formed in the circular main body **121** of the second drive plate **120.** The multiplicity of through holes **130** provides a means for forming a weighted eccentric portion. A coupling post **132** is provided which is mounted on the second inwardly facing surface **124,** and which is further directed, orientated, or extends in a direction towards the first drive plate **100.** The coupling post **132** may be movably positioned within various of the plurality of through holes **130,** as necessary, so as to achieve the objects of the present invention **10.** The coupling post **132** is rotatably coupled to the second end **115** of the drive link **113.** As will be recognized, the drive link **113** couples the first drive plate **100** in force transmitting relation relative to the second drive plate **120.** The second axle **133** has a first, or proximal end **134** which is matingly received in the axle aperture **125,** and which is defined in the second to drive plate **120.** The second axle **133** further has a second or distal end **135** which is rotatably supported in a bearing (not shown) and which is supported in a bearing block **325.** The bearing block **325** is carried by the second frame member **311** of the eccentric drive unit **300.** (Fig. 11).

As best illustrated by Fig 11, a first eccentric camming member **400** and a second eccentric camming member **410** are carried in predetermined, spaced relation along the second axle **133,** and are further located within the channel **321.** The respective camming members **400, 410** are located between the first frame member **301** and the second frame member **311.** The camming members **400, 410** are similar in construction and configuration each having an eccentric body **401,** and **411;** a center axis **402,** and **412;** a radially offset axle aperture **403,** (not shown) to receive the second axle **133;** a cooperating bearing **404,** and **414** and a coupling member defining an annulus **405,** and **415.** The coupling members each have a drive arm **406, 416** respectively. As is well recognized by those who are skilled in the art, the radially offset axle apertures **403,** (not shown) of each eccentric camming member **400, 410,** the bearings **404, 414** and the two coupling members **405, 415** convert the axial rotation of the second drive shaft **133** into reciprocal motion of the respective drive arms **406, 416.**

As should be understood, the first drive arm **406** is coupled in force transmitting relation to the drive member **54** of the counterweight **40.** In this arrangement, the force transmitted by the first drive arm **406** is effective in moving the counter-weight **40** along a reciprocal path of travel **56** (Fig. 15) so as to effect, at least in part, the motion of the product **15** along the product transporting surface **64** in a predetermined direction. Additionally, the second drive arm **416** is coupled in force transmitting relation to the drive member **12** of the elongated conveyor bed the **60.** In this arrangement, force transmitted by the second drive arm **416** is effective in moving the elongated conveyor bed **60** along the reciprocal course of travel **27** between the first, forward position **25,** and the second rearward position **26.** (Fig. 15) As will be best recognized by a study of Figs. 10 and 11, it will be understood that the first axle **92** and the second axle **133** are disposed in substantially parallel, spaced relation, and further will be oriented in a non-coaxial relationship one relative to the other when the powering unit **70** moves along with the radial arc **83.** (Fig. 15). Still further, the first and second axles **92, 133** respectively are each disposed substantially transversely relative to the longitudinal axis **63** of the elongated conveyor bed **60.** As will be recognized from a study of the drawings, the selective energizing of the electric motor **90** is effective in causing rotational movement of the first axle **92.** This rotational motion of the first axle **92** is effective for rotating the first drive plate **100** in a given direction. The imparted rotational motion of the first drive plate **100,** in turn, transmits force through the drive link **113.** The force transmitted by the drive link **113** then imparts rotational movement to the second drive plate **120.** Again, rotation of the second drive plate **120** is effective in causing a corresponding rotation of the second axle **133.** In this arrangement, the corresponding rotation of the second axle **133** transmits force through the eccentric camming members **400, 410** and which are eccentrically mounted along the second axle **133.** The rotation of the camming members **400, 410** is operable to cause a reciprocal, eccentric force to be transmitted by way of the drive arms **406, 416** respectively. The reciprocal force transmitted by the first drive arm **406** is effective in causing the counter-weight **40** to move in a reciprocating fashion along the course of travel **56.** Further, the reciprocal force transmitted by drive arm **416** is effective in causing the elongated conveyor bed **60** to move in a reciprocating fashion along the course of travel **27.** (Fig. 15) moreover, the rotation of the camming members **400, 410** along with the reciprocal motion of the counter weight **40,** and reciprocal motion of the elongated conveyor bed **60** is effective so as to effect movement of product **15** along the product transporting surface **64** (Fig. 1) in the fashion which will be discussed in greater detail, hereinafter.

Referring now to Figs. 1, 2 and 15, the elongated conveyor bed **60** is moveable along a reciprocal path of travel which is generally indicated by the numeral **27.** This path of travel is defined between a first, forward position **25,** and a second rearward position **26.** In operation, the elongated conveyor bed, as a general matter, does not reciprocate at an equal velocity when moving in the direction of the first forward position **25,** or in the second, rearward position **26.** Those familiar in the art of linear conveyors will understand that the elongated conveyor bed **60** when moved in the direction of the first forward position **25,** moves at a velocity and with a displacement which carries the product **15** in a forward direction at a first, predetermined speed or velocity. Then, the conveyor bed **60,** when reversing direction, and moving in the second direction **26,** moves at a velocity or speed which is higher than the predetermined first speed. Therefore, the product **15** is slowly advanced, and the bed **60** is then moved rapidly backwards so that the product **15** shuffles along the product transporting surface **64** when moving from one end to the other. It will be understood that the rotation of the pair of drive plates **100,** and **120** and the eccentrics **400, 410** causes the elongated bed acceleration, movement and reversal of direction which determines the motion of the product **15.** This is clearly set forth in the earlier parent patent application. In this regard, the elongated conveyor bed **60** is rendered operable, in a first mode of operation, wherein the product **15** moves from the first end **61** to the second end **62** at a predetermined speed. Further, and in a second mode of operation, the elongated conveyor bed **60** can be rendered operable such that the product **15** may move in a direction from the second end **62** and towards the first end **61.** Still further, and in a third possible mode of operation; the elongated conveyor bed **60** can be rendered operable such that the product **15** can substantially stop movement once it is located between the first and second ends **61** and **62** respectively of the product transporting surface **64.** Additionally, it has been discovered that the present invention can move product **15** up an incline which has a pitch of less than about 7 degrees when measured from the horizontal plane.

To effect the several modes of operation of the elongated conveyor bed **60,** the powering unit **70** which includes the selectively energizable electric motor **90;** the housing **71;** the endless drive belt **94;** and the drive wheel **96** are pivoted on and about the pivot axle **220** which is carried by the stationary base **200** along the radial arc of travel **83.** This arc of travel **83** is defined by a first position **87,** (Fig. 15) and which positions the powering unit **70** in a given position which effects the first mode of operation of the elongated conveyor bed **60** moving product **15** from the first end **61** to the second end **62.** Further, movement of the powering unit **70** to a second position **88** along the radial arc **83** is operable to effect the second mode of operation of the elongated conveyor bed **60** moving product **15** from the second end **62** to the first end **61.** Still further, and when placed in an intermediate position **89,** the powering unit **70** is operable to effect the third mode of operation of the elongated conveyor bed **60,** and wherein product **15** remains a generally stationary on the product transporting surface **64.** Again, as was discussed in the paragraphs above, and once energized, the electrically energizable motor **90** is effective in imparting physical force so as to cause a corresponding rotation of the first axle **92.** Further, the rotation of the first axle **92** causes the first drive plate **100** to rotate. As earlier discussed, the drive link **113** is coupled to the first drive plate **100** and transmits power or physical force to the second drive plate **120** thereby causing the subsequent rotation of the second drive plate **120,** and the second axle **133** which is coupled therewith. The rotation of the second axle **133** is effective in causing the reciprocal, and eccentric rotational motion of the respective eccentric camming members **400, 410,** and the associated drive arms **406,** and **416.** As earlier noted, one drive arm **416,** as earlier described, causes force to be transmitted to the elongated conveyor bed **60,** and generates reciprocal motion of the elongated conveyor bed **60** along the course of travel **27.** (Fig. 15) This reciprocal motion of the elongated conveyor bed **60** takes place along the path of travel **27,** and between the first and second positions **25** and **26,** respectively, as discussed above. Simultaneously, the rotational movement of the second axle **133** is effective in causing the reciprocal motion of the counter weight **40** along the path of travel **56** between the first position **57,** and the second position **58.** This coordinated movement of the various assemblies, as well as the force generated by the rotation of the first and second drive plates **100,** and **120** is effective in causing the product **15** to move along the product transporting surface **64.** As noted in the paragraphs, above, the selective positioning of the powering unit **70** along the radial arc **83** is effective in causing the elongated conveyor bed **60** to operate in several modes of operation and which provides several novel features for the present invention **10.** As will be recognized, the rotation of the powering unit **70** is effective in moving the selectively energizable motor **90** in a direction along the longitudinal axis **63** of the elongated conveyor bed **60.**

### OPERATION

The operation of the described embodiment of the present invention **10** is believed to be readily apparent and is briefly summarized at this point.

The present invention relates to a linear motion conveyor **10,** which, in its broadest aspect, includes an elongated conveyor bed **60** having opposite first and second ends **61** and **62,** and a longitudinal axis **63,** and wherein the elongated conveyor bed **60** further has a product transporting surface **64** which supports a product **15** for movement between the first and second ends **61** and **62,** respectively of the elongated conveyor bed. Further, and in its broadest aspect, the present invention **10** includes a drive assembly **79** which is oriented in predetermined force transmitting relation relative to the elongated conveyor bed **60,** and which, when energized, imparts reciprocal motion to the elongated conveyor bed **60** to effect the selective movement of the product **15** along the product transporting surface **64** in a first direction which extends between the first and second ends **61** and **62** of the product transporting surface **64;** a second direction which extends from the second end **62,** to the first end 61 of the product transporting surface **64;** and which further substantially stops the movement of the product **15** which is located between the first and second ends **61/62** of the elongated conveyor bed **60,** all without de-energizing the drive assembly **79.**

The drive assembly **79** imparts reciprocal motion to the elongated conveyor bed **60** which has first and second movement components **191,** and **192,** respectively. (Figure 15). The first movement component **191** carries the elongated conveyor bed **60** in a first direction, and at a first predetermined speed. Further, the second movement component **192** carries the elongated conveyor bed **60** in a second direction, which is opposite to the first direction, and at a second predetermined speed which is faster than the first predetermined speed. This is illustrated in Fig.15 by means of the arrows **191** and **192,** respectively, and wherein the longer length arrow **191,** depicts a slower velocity of the elongated conveyor bed **60,** and the shorter length arrow **192** depicts a higher velocity of the of the elongated conveyor bed **60** in a direction opposite to arrow **191.** In the arrangement as seen in the drawings, the product transporting surface **64** is depicted as substantially horizontally oriented. However, in an alternative form of the invention, the product transporting surface **64** is non-horizontally oriented, and could be located at an angle of less than about 7 degrees from the horizontal. In the arrangement as seen in the drawings, the improved linear motion conveyor **10,** as described, and more specifically the elongated conveyor bed **60** thereof reciprocates at a frequency of less than about 325 cycles per minute; achieves an elongated bed displacement of less than about 5 cm; and further has an elongated bed acceleration which is imparted to the product **15** being transported of less than about 44,8 m/s².

## Claims

1. A linear motion conveyor (10) comprising:
an elongated reciprocally moveable conveyor bed (60) having opposite first (61) and second (62) ends and a longitudinal axis, and wherein the elongated conveyor bed (60) further has a product transporting surface (64) which supports a product for selective movement between the first (61) and second (62) ends of the elongated conveyor bed (60); and
a drive assembly (79) communicating in force transmitting relation with the elongated conveyor bed (60), the drive assembly having a selectively energizable motor (90) which when energized, imparts reciprocal motion to the elongated conveyor bed (60), so as to effect the selective movement of the product along the product transporting bed in a first direction which extends from the first (61) end to the second (62) end of the product transporting surface (64), in a second direction which extends from the second (62) end to the first (61) end of the product transporting surface (64), and which further substantially stops the movement of the product upon the product transporting surface (64); and wherein the drive assembly (79) is carried on a stationary base (200) which is located vertically below the elongated conveyor bed (60), and the drive assembly (79) further has a powering unit subassembly (70);
a frame (20) which is supported by the stationary base (200);
a counter-weight (40) carried by the stationary base (200);
a drive member (54) operatively communicating between the counterweight (40) and the drive assembly (79) to reciprocally move the counterweight (40) along a course of travel (56);
a first drive arm (406) borne by the drive assembly (79), and which extends from the drive assembly (79), and is further drivingly coupled to the counter-weight (40), and wherein force applied by the drive assembly (79) to the first drive arm (406) imparts reciprocal motion to the counter-weight (40);
a second drive arm (416) borne by the drive assembly (79) and which extends from the drive assembly (79), and is drivingly coupled to the elongated conveyor bed (60), and wherein force applied by the drive assembly (79) to the second drive arm (416) imparts reciprocal motion to the elongated conveyor bed (60);
wherein the selectively energizable motor (90) has an output shaft (91) operatively communicating with a first axle (92) which is mounted below the elongated conveyor bed (60), and in a substantially horizontal orientation and transversely relative to the longitudinal axis (63) of the elongated conveyor bed (60), and wherein the first axle (92) carries a first drive plate (100), and wherein a second axle (133) is located in a substantially parallel, non-coaxial orientation relative to the first axle (92), and wherein the second axle (133) has a first end (134) carrying a second drive plate (120), and an opposite second end (135), and wherein the first and second drive arms (406,416) are eccentrically drivingly coupled to the second axle (133); and
a drive link (113) coupling the first drive plate (100), and the second drive plate (120) together, and wherein upon energizing the selectively energizable motor (90) the subsequent rotation of the first drive plate (100) is operable to transmit force through the drive link (113) so as to facilitate a subsequent rotation of the second drive plate (120), and the second axle (133), which is coupled therewith, and wherein the rotation of the second axle (133) imparts eccentric reciprocal force to the first and second drive arms (406, 416) so as to impart predetermined, reciprocal motion of the counter-weight (40), and the elongated conveyor bed (60)
**characterized in that**,
the frame (20) has a plurality of spaced spring legs (21, 22, 23, 24) which support the elongated conveyor bed (60) in a predetermined, spaced relation relative to the stationary base (200), and wherein the frame (20) has a first and a second spring leg (23, 24) that movably support the first end (61) of the elongated conveyor bed (60), and a third and fourth spring leg (21, 22) that moveably support the second (62) end of the elongated conveyor bed (60), and wherein each of the aforementioned spring legs (21, 22, 23, 24) have a first end (21b, 22b, 23b, 24b) which is fixedly mounted on the stationary base (200); and an opposite second end (21a, 22a, 23a, 24a) which is fixedly mounted on the elongated conveyor bed (60), and wherein reciprocal movement of the elongated conveyor bed (60) is facilitated by a back-and-forth flexing motion of the plurality of spring legs (21, 22, 23, 24); and **in that**
the counter-weight (40) is located vertically, below, the elongated conveyor bed (60), and between the two spring legs (23, 24) supporting the first end (61) of the elongated conveyor bed (60), and the two spring legs (21, 22) supporting the second end (62) of the elongated conveyor bed (60), and wherein the counter-weight (40) has a plurality of spaced spring legs (49, 50, 51, 52) having a first end (49b, 50b, 51b, 52b) which is fixedly attached to the stationary base (200), and a second end (49a, 50a, 51a, 52a) which is fixedly attached to the counterweight (40); and **in that**
the powering unit (70) is pivotally moveable about a pivot axle (220) which is carried by the stationary base (200), and along an arcuate path of travel (83), and wherein the pivotal movement of the powering unit (70) determines the selective movement of the product (15) upon the product transporting surface (64); and **in that**
the first axle (92) is simultaneously selectively moveable along an arcuate path of travel (83) with the pivotal movement of the powering unit (70) about the pivot axle (220) so as to effect movement of the product (15) in the first and second directions along the product transporting surface (64), and/or to substantially prohibit the movement of the product (15) along the product transporting surface (64).

2. A linear motion conveyor as claimed in claim 1, and wherein the elongated conveyor bed (60) has a given weight, and wherein the counter-weight (40) has a weight which is at least about 80% to about 120% of the weight of the elongated conveyor bed (60).

3. A linear motion conveyor as claimed in claim 1, and wherein the drive assembly (79) imparts reciprocal motion to the elongated conveyor bed (60) which has a first (191) and second (192) movement components, and wherein the first movement component (191) carries the elongated conveyor bed (60) in a first direction, and at a first predetermined velocity, and wherein the second movement component (192) carries the elongated conveyor bed (60) in a second direction, which is opposite to the first direction, and at a second predetermined velocity which is faster than the first predetermined speed.

4. A linear motion conveyor as claimed in claim 3, and wherein the respective first (100) and second (120) drive plates are located in a first predetermined rotational position, one relative to the other to effect the first movement component (191), and in a second, predetermined rotational position (87, 88), one relative to the other, to effect the second movement component (192).

5. A linear motion conveyor as claimed in claim 4, and wherein the reciprocal motion of the counter-weight (40) has a first and second movement components (56), and wherein the first movement component (56) of the counter-weight (40) carries the counter-weight (40) in a first direction which is towards the drive assembly (79), and the second movement component (56) of the counter-weight (40) carries the counter-weight (40) in a second direction which is away from the drive assembly (79), and wherein the first movement component (56) of the counter-weight (40) occurs substantially simultaneously as the first movement portion (191) of the elongated conveyor bed (60) carries the elongated conveyor bed (60) in the first direction, and wherein the second movement component (56) of the counter-weight (40) occurs substantially simultaneously when the second movement (192) component of the elongated conveyor bed (60) carries the elongated conveyor bed (60) in the second direction.

6. A linear motion conveyor bed as claimed in claim 1, and wherein product transporting surface (64) is substantially horizontally oriented.

7. A linear motion conveyor as claimed in claim 1, and wherein the product transporting bed (64) is non-horizontally oriented, and at an angle of not greater than about 7 degrees from the horizontal.

8. A linear motion conveyor as claimed in claim 5, and wherein the arcuate path of travel (83) of the first axle (92) moving in unison with the powering unit (79) is less than about 12,7 cm.

9. A linear motion conveyor as claimed in claim 5, and wherein the respective first and second drive plates (100, 120) each have a substantially similar weight.

10. A linear motion conveyor as claimed in claim 5, and wherein the elongated conveyor bed (60) reciprocates at a frequency of less than about 325 cycles; achieves an elongated bed displacement of less than about 5 cm; and further has an elongated bed acceleration which is imparted to the product (15) being transported of less than about 44,8 m/s².

## Patentansprüche

1. Linearbewegungsförderer (10), welcher Folgendes aufweist:
ein längliches, hin- und her bewegliches Förderbett (60), das gegenüberliegende erste (61) und zweite (62) Enden und eine Längsachse aufweist, und wobei das längliche Förderbett (60) des Weiteren eine Produkttransportfläche (64) aufweist, die ein Produkt zur selektiven Bewegung zwischen den ersten (61) und zweiten (62) Enden des länglichen Fördererbetts (60) trägt; und
eine Antriebsanordnung (79), die in einer Kraft übertragenden Art und Weise mit dem länglichen Förderbett (60) kommuniziert, wobei die Antriebsanordnung einen selektiv mit Energie versorgbaren Motor (90) aufweist, der, wenn er mit Energie versorgt wird, eine Hin- und Herbewegung auf das längliche Förderbett (60) ausübt, um die selektive Bewegung des Produkts entlang des Produkttransportbetts in einer ersten Richtung, die sich von dem ersten (61) Ende zu dem zweiten (62) Ende der Produkttransportfläche (64) erstreckt, in einer zweiten Richtung, die sich von dem zweiten (62) Ende zu dem ersten (61) Ende der Produkttransportfläche (64) erstreckt, zu bewirken, und der des Weiteren die Bewegung des Produkts auf der Produkttransportfläche (64) im Wesentlichen stoppt;
und wobei die Antriebsanordnung (79) auf einem stationären Grundkörper (200) getragen ist, der vertikal unterhalb des länglichen Fördererbetts (60) angeordnet ist, und wobei die Antriebsanordnung (79) des Weiteren eine Antriebseinheit-Unteranordnung (70) aufweist;
einen Rahmen (20), der durch den stationären Grundkörper (200) gehalten ist; ein Gegengewicht (40), das durch den stationären Grundkörper (200) gehalten ist;
ein Antriebselement (54), das betriebsfähig zwischen dem Gegengewicht (40) und der Antriebsanordnung (79) kommuniziert, um das Gegengewicht (40) entlang eines Bewegungsverlaufs (56) hin und her zu bewegen;
einen ersten Antriebsarm (406), der von der Antriebsanordnung (79) gehalten ist und der sich von der Antriebsanordnung (79) weg erstreckt und der des Weiteren antriebsmäßig mit dem Gegengewicht (40) verbunden ist, und wobei eine durch die Antriebsanordnung (79) auf den ersten Antriebsarm (406) aufgebrachte Kraft eine Hin- und Herbewegung auf das Gegengewicht (40) ausübt;
einen zweiten Antriebsarm (416), der von der Antriebsanordnung (79) gehalten ist und der sich von der Antriebsanordnung (79) weg erstreckt und der antreibbar mit dem länglichen Förderbett (60) verbunden ist, und wobei eine durch die Antriebsanordnung (79) auf den zweiten Antriebsarm (416) aufgebrachte Kraft eine Hin- und Herbewegung auf das längliche Förderbett (60) ausübt;
wobei der selektiv mit Energie versorgbare Motor (90) eine Ausgangswelle (91) aufweist, die betriebsfähig mit einer ersten Achse (92) in Verbindung steht, die unterhalb des länglichen Fördererbetts (60) und in einer im Wesentlichen horizontalen Ausrichtung und quer relativ zu der Längsachse (63) des länglichen Fördererbetts (60) montiert ist, und wobei die erste Achse (92) eine erste Antriebsplatte (100) trägt, und wobei eine zweite Achse (133) in einer im Wesentlichen parallelen, nicht koaxialen Ausrichtung relativ zu der ersten Achse (92) angeordnet ist, und wobei die zweite Achse (133) ein erstes Ende (134), das eine zweite Antriebplatte (120) trägt, und ein gegenüberliegendes zweites Ende (135) aufweist, und wobei die ersten und zweiten Antriebsarme (406, 416) exzentrisch antreibbar mit der zweiten Achse (133) verbunden sind; und
eine Antriebsverbindung (113), welche die erste Antriebsplatte (100) und die zweite Antriebsplatte (120) miteinander verbindet, und wobei nachdem der selektiv mit Energie versorgbare Motor (90) mit Energie versorgt wird, die darauffolgende Rotation der ersten Antriebsplatte (100) in der Lage ist, eine Kraft durch die Antriebsverbindung (113) zu übertragen, um eine nachfolgende Rotation der zweiten Antriebsplatte (120) und der zweiten Achse (133), die mit derselben verbunden ist, zu ermöglichen, und wobei die Rotation der zweiten Achse (133) eine exzentrische, hin- und her gehende Kraft auf die ersten und zweiten Antriebsarme (406,416) aufbringt, um eine bestimmte, hin- und her gehende Bewegung des Gegengewichts (40) und des länglichen Fördererbetts (60) zu erzeugen,
**dadurch gekennzeichnet, dass**
der Rahmen (20) eine Vielzahl von voneinander beabstandeten Federbeinen (21,22,23,24) aufweist, welche das längliche Förderbett (60) in einer bestimmten, voneinander beabstandeten Beziehung relativ zu dem stationären Grundkörper (200) halten, und wobei der Rahmen (20) ein erstes und ein zweites Federbein (23,24), die das erste Ende (61) des länglichen Fördererbetts (60) auf bewegliche Art und Weise abstützen, und ein drittes und ein viertes Federbein (21,22) aufweist, welche das zweite (62) Ende des länglichen Fördererbetts (60) beweglich abstützen, und wobei jedes der oben genannten Federbeine (21,22,23,24) ein erstes Ende (21b,22b,23b,24b), das fest an dem stationären Grundkörper (200) montiert ist, und ein gegenüberliegendes zweites Ende (21a,22a,23a,24a) aufweist, das fest an dem länglichen Förderbett (60) montiert ist, und wobei die Hin- und Herbewegung des länglichen Fördererbetts (60) durch eine Vorwärts- und Rückwärtsbiegebewegung der Vielzahl von Federbeinen (21,22,23,24) ermöglicht wird, und dass
das Gegengewicht (40) vertikal unterhalb des länglichen Fördererbetts (60) und zwischen den zwei Federbeinen (23,24), welche das erste Ende (61) des länglichen Fördererbetts (60) abstützen, und den zwei Federbeinen (21,22), welche das zweite Ende (62) des länglichen Fördererbetts (60) abstützen, angeordnet ist, und wobei das Gegengewicht (40) eine Vielzahl von voneinander beabstandeten Federbeinen (49,50,51,52) aufweist, die ein erstes Ende (49b,50b,51b,52b), das fest an dem stationären Grundkörper (200) angebracht ist, und ein zweites Ende (49a,50a,51a,52a) aufweisen, das fest an dem Gegengewicht (40) angebracht ist; und dass
die Antriebseinheit (70) gelenkig um eine Gelenkachse (220), die von dem stationären Grundkörper (200) getragen ist, und entlang eines bogenförmigen Bewegungspfads (83) beweglich ist, und wobei die gelenkige Bewegung der Antriebseinheit (70) die selektive Bewegung des Produkts (15) auf der Produkttransportfläche (64) festlegt; und dass
die erste Achse (92) gleichzeitig selektiv entlang eines bogenförmigen Bewegungspfads (83) mit der gelenkigen Bewegung der Antriebseinheit (70) um die Gelenkachse (220) beweglich ist, um die Bewegung des Produkts (15) in den ersten und zweiten Richtungen entlang der Produkttransportfläche (64) zu bewirken und/oder um die Bewegung des Produkts (15) entlang der Produkttransportfläche (64) im Wesentlichen zu verhindern.

2. Linearbewegungsförderer nach Anspruch 1, wobei das längliche Förderbett (60) ein vorbestimmtes Gewicht aufweist, und wobei das Gegengewicht (40) ein Gewicht aufweist, das wenigstens ungefähr 80 % bis ungefähr 120 % des Gewichts des länglichen Fördererbetts (60) ist.

3. Linearbewegungsförderer nach Anspruch 1, wobei die Antriebsanordnung (79) eine Hin- und Herbewegung auf das längliche Förderbett (60) aufbringt, die eine erste (191) und eine zweite (192) Bewegungskomponente aufweist, und wobei die erste Bewegungskomponente (191) das längliche Förderbett (60) in einer ersten Richtung und mit einer ersten vorbestimmten Geschwindigkeit trägt, und wobei die zweite Bewegungskomponente (192) das längliche Förderbett (60) in einer zweiten Richtung, die entgegengesetzt zu der ersten Richtung ist, und mit einer zweiten vorbestimmten Geschwindigkeit trägt, die schneller ist als die erste vorbestimmte Geschwindigkeit.

4. Linearbewegungsförderer nach Anspruch 3, wobei die jeweiligen ersten (100) und zweiten (120) Antriebsplatten in einer ersten vorbestimmten Rotationsposition, eine relativ zu der anderen, um die erste Bewegungskomponente (191) zu bewirken, und in einer zweiten, vorbestimmten Rotationsposition (87,88) eine relativ zu der anderen, angeordnet sind, um die zweite Bewegungskomponente (192) zu bewirken.

5. Linearbewegungsförderer nach Anspruch 4, wobei die Hin- und Herbewegung des Gegengewichts (40) eine erste und eine zweite Bewegungskomponente (56) aufweist, und wobei die erste Bewegungskomponente (56) des Gegengewichts (40) das Gegengewicht (40) in einer ersten Richtung trägt, die in Richtung der Antriebsanordnung (79) ist, und wobei die zweite Bewegungskomponente (56) des Gegengewichts (40) das Gegengewicht (40) in einer zweiten Richtung trägt, die weg von der Antriebsanordnung (79) ist, und wobei die erste Bewegungskomponente (56) des Gegengewichts (40) im Wesentlichen gleichzeitig auftritt, wenn die erste Bewegungskomponente (191) des länglichen Fördererbetts (60) das längliche Förderbett (60) in der ersten Richtung trägt, und wobei die zweite Bewegungskomponente (56) des Gegengewichts (40) im Wesentlichen gleichzeitig auftritt, wenn die zweite Bewegungskomponente (192) des länglichen Fördererbetts (60) das längliche Förderbett (60) in der zweiten Richtung trägt.

6. Linearbewegungsförderer nach Anspruch 1, wobei die Produkttransportfläche (64) im Wesentlichen horizontal ausgerichtet ist.

7. Linearbewegungsförderer nach Anspruch 1, wobei das Produkttransportbett (64) nicht horizontal und mit einem Winkel von nicht mehr als 7 Grad von der Horizontalen ausgerichtet ist.

8. Linearbewegungsförderer nach Anspruch 5, wobei der bogenförmige Bewegungspfad (83) der ersten Achse (92), die sich zusammen mit der Antriebseinheit (79) bewegt, weniger als ungefähr 12,7 cm ist.

9. Linearbewegungsförderer nach Anspruch 5, wobei die jeweiligen ersten und zweiten Antriebsplatten (100,120) jede ein im Wesentlichen ähnliches Gewicht aufweisen.

10. Linearbewegungsförderer nach Anspruch 5, wobei das längliche Förderbett (60) sich mit einer Frequenz von weniger als ungefähr 325 Zyklen hin- und her bewegt; eine längliche Bettverschiebung von weniger als ungefähr 5 cm erreicht; und des Weiteren eine Beschleunigung des länglichen Betts, die auf das Produkt (15), das transportiert wird, einwirkt, von weniger als ungefähr 44,8 m/s² aufweist.

## Revendications

1. Convoyeur à mouvement linéaire (10) comprenant :
un lit de convoyeur allongé (60) réciproquement mobile ayant des première (61) et seconde (62) extrémités opposées et un axe longitudinal, et dans lequel le lit de convoyeur allongé (60) possède en outre une surface de transport de produit (64) qui supporte un produit pour un mouvement sélectif entre la première (61) et la seconde (62) extrémités du lit de convoyeur allongé (60) ; et un ensemble d'entraînement (79) communiquant en relation de transmission de force avec le lit de convoyeur allongé (60), l'ensemble d'entraînement ayant un moteur à excitation sélective (90) qui, lorsqu'il est sous tension, communique un mouvement réciproque au lit de convoyeur allongé (60), de manière à effectuer le mouvement sélectif du produit le long du lit de transport de produit dans une première direction qui s'étend de la première extrémité (61) à la seconde extrémité (62) de la surface de transport de produit (64), dans une seconde direction qui s'étend de la seconde extrémité (62) à la première extrémité (61) de la surface de transport de produit (64), et qui arrête en outre sensiblement le mouvement du produit de la surface de transport de produit (64) ; et dans lequel l'ensemble d'entraînement (79) est transporté sur une base stationnaire (200) qui est située verticalement sous le lit de convoyeur allongé (60), et l'ensemble d'entraînement (79) possède en outre un sous-ensemble d'unité d'alimentation (70) ;
un cadre (20) qui est supporté par la base stationnaire (200) ;
un contrepoids (40) porté par la base stationnaire (200) ;
un élément d'entraînement (54) communiquant fonctionnellement entre le contrepoids (40) et l'ensemble d'entraînement (79) pour déplacer le contrepoids (40) dans un mouvement réciproque sur une trajectoire de déplacement (56) ;
un premier bras d'entraînement (406) supporté par l'ensemble d'entraînement (79), et qui s'étend depuis l'ensemble d'entraînement (79), et est en outre couplé par entraînement au contrepoids (40), et dans lequel la force appliquée par l'ensemble d'entraînement (79) au premier bras d'entraînement (406) communique un mouvement réciproque au contrepoids (40) ;
un second bras d'entraînement (416) supporté par l'ensemble d'entraînement (79) et qui s'étend depuis l'ensemble d'entraînement (79), et est couplé par entraînement au lit de convoyeur allongé (60), et dans lequel la force appliquée par l'ensemble d'entraînement (79) au second bras d'entraînement (416) communique un mouvement réciproque au lit de convoyeur allongé (60) ;
dans lequel le moteur à excitation sélective (90) a un arbre de sortie (91) en communication opérationnelle avec un premier essieu (92) qui est monté sous le lit de convoyeur allongé (60), et dans une orientation sensiblement horizontale et transversalement par rapport à l'axe longitudinal (63) du lit de convoyeur allongé (60), et dans lequel le premier essieu (92) supporte une première plaque d'entraînement (100), et dans lequel un second essieu (133) est situé dans une orientation sensiblement parallèle, non coaxiale par rapport au premier essieu (92), et dans lequel le second essieu (133) a une première extrémité (134) supportant une seconde plaque d'entraînement (120), et une seconde extrémité opposée (135), et dans lequel les premier et second bras d'entraînement (406, 416) sont couplés de manière excentrique au second essieu (133) ; et
une liaison d'entraînement (113) couplant la première plaque d'entraînement (100), et la seconde plaque d'entraînement (120) ensemble, et dans lequel, lors de la mise sous tension du moteur à excitation sélective (90), la rotation ultérieure de la première plaque d'entraînement (100) peut être actionnée pour transmettre une force par l'intermédiaire de la liaison d'entraînement (113) de manière à faciliter une rotation ultérieure de la seconde plaque d'entraînement (120), et le second essieu (133), qui est couplé à celui-ci, et dans lequel la rotation du second essieu (133) communique une force réciproque excentrique aux premier et second bras d'entraînement (406, 416) de manière à communiquer un mouvement réciproque prédéterminé du contrepoids (40), et du lit de convoyeur allongé (60)
**caractérisé en ce que**,
le cadre (20) a une pluralité de jambes de ressort espacés (21, 22, 23, 24) qui supportent le lit de convoyeur allongé (60) dans une relation prédéterminée et espacée par rapport à la base stationnaire (200), et dans lequel le cadre (20) a une première et une deuxième jambes de ressort (23, 24) qui supportent de manière mobile la première extrémité (61) du lit de convoyeur allongé (60), et une troisième et une quatrième jambes de ressort (21, 22) qui supportent de manière mobile la seconde extrémité (62) du lit de convoyeur allongé (60), et dans lequel chacune des jambes de ressort susmentionnées (21, 22, 23, 24) a une première extrémité (21b, 22b, 23b, 24b) qui est montée de manière fixe sur la base stationnaire (200) ; et une seconde extrémité opposée (21a, 22a, 23a, 24a) qui est montée de manière fixe sur le lit de convoyeur allongé (60), et dans lequel le mouvement réciproque du lit de convoyeur allongé (60) est facilité par un mouvement de flexion de va-et-vient de la pluralité de jambes de ressort (21, 22, 23, 24) ; et **en ce que**
le contrepoids (40) est situé verticalement, en dessous, du lit de convoyeur allongé (60), et entre les deux jambes de ressort (23, 24) supportant la première extrémité (61) du lit de convoyeur allongé (60), et les deux jambes de ressort (21, 22) supportant la seconde extrémité (62) du lit de convoyeur allongé (60), et dans lequel le contrepoids (40) a une pluralité de jambes de ressort espacées (49, 50, 51, 52) ayant une première extrémité (49b, 50b, 51b, 52b) qui est fixée de manière fixe à la base stationnaire (200), et une seconde extrémité (49a, 50a, 51a, 52a) qui est fixé de manière fixe au contrepoids (40) ; et **en ce que**
l'unité d'alimentation (70) est mobile de manière pivotante autour d'un axe de pivotement (220) qui est transporté par la base stationnaire (200), et le long d'un trajet de déplacement arqué (83), et dans lequel le mouvement de pivotement de l'unité d'alimentation (70) détermine le mouvement sélectif du produit (15) sur la surface de transport de produit (64) ; et **en ce que**
le premier essieu (92) est simultanément déplaçable de manière sélective le long d'une trajectoire de déplacement arquée (83) avec le mouvement pivotant de l'unité d'alimentation (70) autour de l'axe de pivotement (220) de manière à effectuer le mouvement du produit (15) dans les première et seconde directions le long de la surface de transport de produit (64), et/ou à interdire sensiblement le mouvement du produit (15) le long de la surface de transport de produit (64).

2. Convoyeur à mouvement linéaire selon la revendication 1, et dans lequel le lit de convoyeur allongé (60) a un poids donné, et dans lequel le contrepoids (40) a un poids qui est d'au moins environ 80% à environ 120% du poids du lit de convoyeur allongé (60).

3. Convoyeur à mouvement linéaire selon la revendication 1, et dans lequel l'ensemble d'entraînement (79) communique un mouvement réciproque au lit de convoyeur allongé (60) qui a un premier (191) et un second (192) composants de mouvement, et dans lequel le premier composant de mouvement (191) transporte le lit de convoyeur allongé (60) dans une première direction, et à une première vitesse prédéterminée, et dans lequel le second composant de mouvement (192) transporte le lit de convoyeur allongé (60) dans une seconde direction, qui est opposée à la première direction, et à une seconde vitesse prédéterminée qui est plus rapide que la première vitesse prédéterminée.

4. Convoyeur à mouvement linéaire selon la revendication 3, et dans lequel les première (100) et seconde (120) plaques d'entraînement respectives sont situées dans une première position de rotation prédéterminée, l'une par rapport à l'autre pour effectuer le premier composant de mouvement (191), et dans une seconde position de rotation prédéterminée (87, 88), l'une par rapport à l'autre, pour effectuer le second composant de mouvement (192).

5. Convoyeur à mouvement linéaire selon la revendication 4, et dans lequel le mouvement réciproque du contre-poids (40) a un premier et un second composants de mouvement (56), et dans lequel le premier composant de mouvement (56) du contre-poids (40) transporte le contrepoids (40) dans une première direction qui est dirigée vers l'ensemble d'entraînement (79), et le second composant de mouvement (56) du contre-poids (40) transporte le contre-poids (40) dans une seconde direction qui est éloignée de l'ensemble d'entraînement (79), et dans lequel le premier composant de mouvement (56) du contrepoids (40) se produit sensiblement simultanément lorsque le premier composant de mouvement (191) du lit de convoyeur allongé (60) transporte le lit de convoyeur allongé (60) dans la première direction, et dans lequel le second composant de mouvement (56) du contrepoids (40) se produit sensiblement simultanément lorsque le second composant de mouvement (192) du lit de convoyeur allongé (60) transporte le lit de convoyeur allongé (60) dans la seconde direction.

6. Lit de convoyeur à mouvement linéaire selon la revendication 1, et dans lequel la surface de transport de produit (64) est sensiblement orientée horizontalement.

7. Convoyeur à mouvement linéaire selon la revendication 1, et dans lequel le lit de transport de produit (64) est orienté de manière non horizontale, et à un angle ne dépassant pas environ 7 degrés par rapport à l'horizontale.

8. Convoyeur à mouvement linéaire selon la revendication 5, et dans lequel la trajectoire de déplacement arquée (83) du premier essieu (92) se déplaçant à l'unisson avec l'unité d'alimentation (79), est inférieure à environ 12,7 cm.

9. Convoyeur à mouvement linéaire selon la revendication 5, et dans lequel les première et seconde plaques d'entraînement respectives (100, 120) ont chacune un poids sensiblement similaire.

10. Convoyeur à mouvement linéaire selon la revendication 5, et dans lequel le lit de convoyeur allongé (60) effectue un mouvement réciproque à une fréquence inférieure à environ 325 cycles ; réalise un déplacement du lit allongé inférieur à environ 5 cm ; et présente en outre une accélération du lit allongé qui est communiquée au produit (15) transporté inférieure à environ 44,8 m/s².
